# EUROPEAN PATENT APPLICATION

(11) **EP 3 293 694 A1**
(43) Date of publication of application: **14.03.2018**
(21) Application number: 16188392.1
(22) Date of filing: 12.09.2016
(51) Int. Cl.: G06Q 30/06, G06Q 10/08

(54) **METHOD OF MANAGING THE DELIVERY OF PURCHASED ITEMS**

(71) Applicant: Mastercard International Incorporated, Purchase NY 10577 (US)
(72) Inventor: RAMACHANDRAN, Senthooran, Ilford, Essex IG2 6SG (GB)
(74) Representative: Gill Jennings & Every LLP

(57) **Abstract**

Described is a method, at a computer 102, of controlling traffic flow in a transit network having the steps of: receiving a first purchase request from a first consumer; determining a geographical location for the first consumer; defining a geographical area based on the first consumer's location; determining a first supplier located within the geographical area; determining a geographical location for the first supplier; and controlling traffic flow by: obtaining first traffic flow data based on the respective geographical locations of the first consumer and the first supplier; determining a first collection time based on the first traffic flow data; and sending the first collection time to the first consumer. A method, at a computer 112, of managing a food produce inventory, a computer and, a computer readable medium are also described.

## Description

### Field of the Invention

The present invention relates generally, but not exclusively, to methods and systems capable of controlling traffic flow in a transit network to reduce congestion and emissions.

### Background to the Invention

Congestion in many transit networks, such as road networks in towns and cities, is on the rise, primarily due to an increase in the number of business collections and deliveries and population growth.

Congestion is commonly understood to have a detrimental effect on the environment. Motorised vehicles are known to be one of the largest producers of air pollution. Areas with high levels of congestion, such as towns and cities, have levels of air pollution which far exceed the average. This is because slower moving road traffic is believed to emit a greater amount of air pollution than fast moving road traffic. This is a result of an increase in fuel consumption when motorised vehicles accelerate and decelerate, relative to vehicles travelling at a constant speed. The increase in fuel consumption leads to an increase in the amount of pollutants released into the air.

The observed increase in business collections and deliveries has led to a rise in congestion, which in turn has led to a rise in air pollution. Accordingly, there is a need to reduce congestion in transit networks, particularly congestion due to business collections and deliveries.

### Summary of the Invention

According to an aspect of the invention, there is provided a method, at a computer, of controlling traffic flow in a transit network, the method comprising the steps of: receiving a first purchase request from a first consumer; determining a geographical location for the first consumer; defining a geographical area based on the first consumer's location; determining a first supplier located within the geographical area; determining a geographical location for the first supplier; and controlling traffic flow by: obtaining first traffic flow data based on the respective geographical locations of the first consumer and the first supplier; determining a first collection time based on the first traffic flow data; and sending the first collection time to the first consumer.

The above method controls traffic flow in a transit network by determining an optimum collection time based on localised traffic flow data. Traffic flow data specific to the locations of the first consumer and the first supplier is obtained and used to determine the most suitable collection time which is sent to the first consumer. In doing so, traffic flow in the transit network is controlled by reducing the likelihood of a collection vehicle adding to congestion in the transit network and reducing the likelihood of vehicle journey time being increased, for example, due to a road accident or rush hour traffic. There are also environmental benefits as overall emissions are reduced.

Preferably, the first collection time is determined by analysing the first traffic flow data to identify a period of expected low traffic flow and setting the first collection time within the identified period. By identifying a period of expected low traffic flow and setting the first collection time within the identified period, traffic flow in the transit network is controlled by reducing the likelihood that a collection vehicle will add to congestion and that collection vehicle journey times will be extended due to traffic.

Preferably, the method further comprises the steps of: receiving a second purchase request from a second consumer located within the geographical area; determining a geographical location for the second consumer; and controlling traffic flow by: obtaining second traffic flow data based on the respective geographical locations of the second consumer and the first supplier; determining a second collection time based on the second traffic flow data; and sending the second collection time to the second consumer. In this way, traffic flow in the transit network can be controlled and optimised for purchase request received from multiple consumers. Preferably, the step of determining a first supplier further comprises determining a plurality of suppliers located within the geographical area. Preferably, the step of determining a geographical location for the first supplier further comprises determining a geographical location for each of the plurality of suppliers. Preferably, the method further comprises the step of obtaining supply capacity data for each of the plurality of suppliers.

Preferably, the step of determining a first supplier further comprises selecting the first supplier from the plurality of suppliers based on the geographical location of the first consumer and/or the second consumer, the geographical locations of the plurality of suppliers in the list of suppliers and the supply capacity data;

Traffic flow in a transit network is controlled by selecting an optimum supplier to fulfil a consumer purchase request. In carrying out the method, several factors are taken into consideration. The respective geographical locations of the first and/or second consumers and the potential suppliers are taken into consideration along with the supply capacities of potential suppliers in order to select an optimal supplier. By taking these factors into consideration, collection vehicle journeys are optimised so as to reduce time spent by vehicles on the transit network and to reduce the impact of collection vehicles on congestion.

Preferably, the first supplier is selected by identifying a supplier located at a shortest distance from the first and/or second consumer. By identifying the supplier located closest to the first and/or second consumer, traffic flow in the transit network is controlled by reducing the distance collection vehicles are required to travel.

Preferably, the method further comprises the steps of: determining if any of the plurality of suppliers is able to fulfil the first and/or second purchase request based on the capacity data; and if the capacity data indicates that one or more of the plurality of suppliers is able to fulfil the first and/or second purchase request, selecting one of the one or more suppliers as the first supplier. In this way, a single supplier can fulfil at least one or all of the consumer purchase requests, thereby minimising the number of journeys collection vehicles are required to make in the transit network.

Preferably, the method further comprises the step of selecting a second supplier based on a geographical location of the first and/or second consumer and the geographical locations of the plurality of suppliers, if the capacity data indicates that no one supplier is able to fulfil the first and/or second purchase request. This ensures that a consumer purchase request is always fulfilled and that, in the instance where the request cannot be fulfilled by a single supplier, multiple suppliers are selected based on their geographical locations, ensuring the additional distance collection vehicles are required to travel is minimised.

Preferably, the method further comprises the steps of: identifying any purchase items contained within the first purchase request and the second purchase request; determining any common purchase items contained within both purchase requests; aggregating the common purchase items to determine a total number for each purchase item; generating a purchase item price for each purchase item based on their total number; and if the total number of a purchase item exceeds an upper threshold, reducing the purchase item price for that purchase item.

Preferably, an extent of the geographical area is defined based on one or more of the following rules: a number of suppliers located within the geographical area must exceed a predetermined lower threshold; a number of suppliers located within the geographical area must not exceed a predetermined upper threshold.

Setting a lower supplier number threshold ensures that there are enough suppliers for larger consumer purchase requests, such as those which require multiple suppliers to be fulfilled. Setting an upper supplier number threshold ensures that the required data processing is not unnecessarily high by limiting the total number of suppliers.

Preferably, an extent of the geographical area is determined based on one or more of the following rules: a number of consumers located within the geographical area must exceed a predetermined lower threshold; and a number of consumers located within the geographical area must not exceed a predetermined upper threshold.

Preferably, an extent of the geographical area is determined based on one or more of the following rules: a number of people living in the geographical area must exceed a predetermined lower threshold; and a number of people living in the geographical area must not exceed a predetermined upper threshold; and

According to an aspect of the invention, there is provided a method of controlling traffic flow in a transit network, the method comprising the steps, at a computer, of: receiving a first purchase request from a first consumer; determining a geographical location for the first consumer; defining a geographical area based on the first consumer's location; determining a first supplier located within the geographical area; determining a geographical location for the first supplier; and controlling traffic flow by: obtaining first traffic flow data based on the respective geographical locations of the first consumer and the first supplier; determining a first collection time based on the first traffic flow data; and sending the first collection time to the first consumer; the method further comprising the step of driving a collection vehicle to the first supplier at the geographical location for the first supplier at the first collection time thereby reducing congestion.

According to an aspect of the invention, there is provided a method, at a computer, of managing a food produce inventory, the method comprising the steps of: receiving an order for a meal; determining a list of meal ingredients contained in the meal; determining an amount of each meal ingredient; subtracting the amount of each meal ingredient from a corresponding inventory ingredient amount associated with the food produce inventory; determining whether any inventory ingredient amounts are below a predetermined threshold level; if any inventory ingredient amount is below the predetermined threshold level, generating a purchase request corresponding to that ingredient.

In this way, the food produce inventory can be accurately managed and replenished as the food produce inventory amounts are directly linked to received orders for meals.

According to an aspect of the invention, there is provided a computer for performing the steps of the method of managing a food produce inventory comprising: a meal order receiving module; a meal ingredients determining module; an inventory management module; and a purchase request generating module.

According to an aspect of the invention, there is provided a computer comprising: a memory; a consumer communication module configured to receive a first purchase request from a consumer; a geographical data module configured to determine a geographical location for the first consumer, define a geographical area based on the first consumer's location, determine a first supplier located within the geographical area and determine a geographical location for the first supplier; a traffic flow data module configured to obtain first traffic flow data based on the respective geographical locations of the first consumer and the first supplier; and a collection time determining module configured to determine a first collection time based on the first traffic flow data for sending to the first consumer.

According to an aspect of the invention, there is provided a consumer device for sending a purchase request to a computer the consumer device comprising: a consumer input receiving module configured to receive a consumer input regarding a purchase; a purchase request generating module configured to generate a purchase request based on the consumer input; and a computer communication module configured to send the purchase request to the computer and receive a collection time from the computer; the computer comprising: a memory; a consumer communication module configured to receive the purchase request from the consumer device; a geographical data module configured to determine a geographical location for the consumer device, define a geographical area based on the consumer device's location, determine a supplier located within the geographical area and determine a geographical location for the supplier; a traffic flow data module configured to obtain traffic flow data based on the respective geographical locations of the consumer device and the supplier; and a collection time determining module configured to determine a collection time based on the traffic flow data for sending to the consumer device.

According to an aspect of the invention, there is provided a computer readable medium containing instructions which when executed cause a computer to perform a method of controlling traffic flow in a transit network, the method comprising the steps of: receiving a first purchase request from a first consumer; determining a geographical location for the first consumer; defining a geographical area based on the first consumer's location; determining a first supplier located within the geographical area; determining a geographical location for the first supplier; and controlling traffic flow by: obtaining first traffic flow data based on the respective geographical locations of the first consumer and the first supplier; determining a first collection time based on the first traffic flow data; and sending the first collection time to the first consumer.

According to an aspect of the invention, there is provided a computer readable medium containing instructions which when executed cause a computer to perform a method of managing a food produce inventory, the method comprising the steps of: receiving an order for a meal; determining a list of meal ingredients contained in the meal; determining an amount of each meal ingredient; subtracting the amount of each meal ingredient from a corresponding inventory ingredient amount associated with the food produce inventory; determining whether any inventory ingredient amounts are below a predetermined threshold level; if any inventory ingredient amount is below the predetermined threshold level, generating a purchase request corresponding to that ingredient.

### Brief Description of Drawings

Embodiments will now be described, by way of example only, with reference to the accompanying drawings, in which:
Figure 1 depicts a representation of the components in a system;
Figure 2 depicts components of a computer shown in Figure 1;
Figure 3 is a flow diagram depicting the method steps carried out at the computer of Figure 1; and
Figure 4 is a flow diagram depicting the method steps carried out at an inventory management computer shown in Figure 1.

### Detailed Description

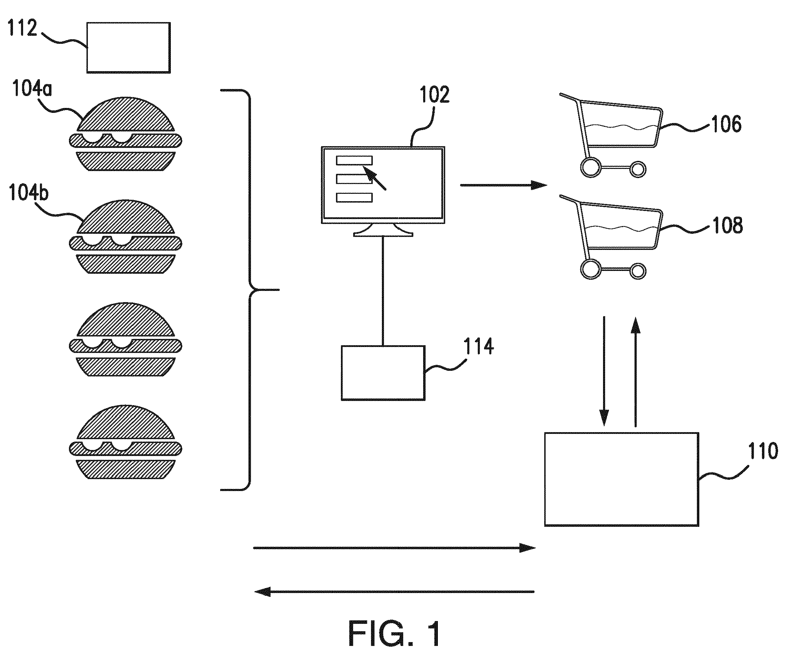

Figure 1 depicts a representation of the components in a system suitable for carrying out the method described herein. The system comprises a computer 102, a payment processing network 110, an inventory management computer 112 and an external server 114.

The computer 102 is in communication with a first consumer 104a, a second consumer 104b and first and second suppliers 106 and 108. The first consumer 104a, the second consumer 104b and the first and second suppliers 106 and 108 are able to make financial transactions via the payment processing network 110 to complete purchase requests.

The inventory management computer 112 is present where, for example, the first consumer 104a is a restaurant. The inventory management computer 112 is in communication with the computer 102 and is able to generate purchase requests based on determined food produce inventory levels of the first consumer 104a. The inventory management computer 112 is shown at the location of the first consumer 104a. The inventory management computer 112 could equally be a separate server (not shown) located remotely from the first consumer 104a, or one or more functions of the inventory management computer 112 could be carried out by the computer 102.

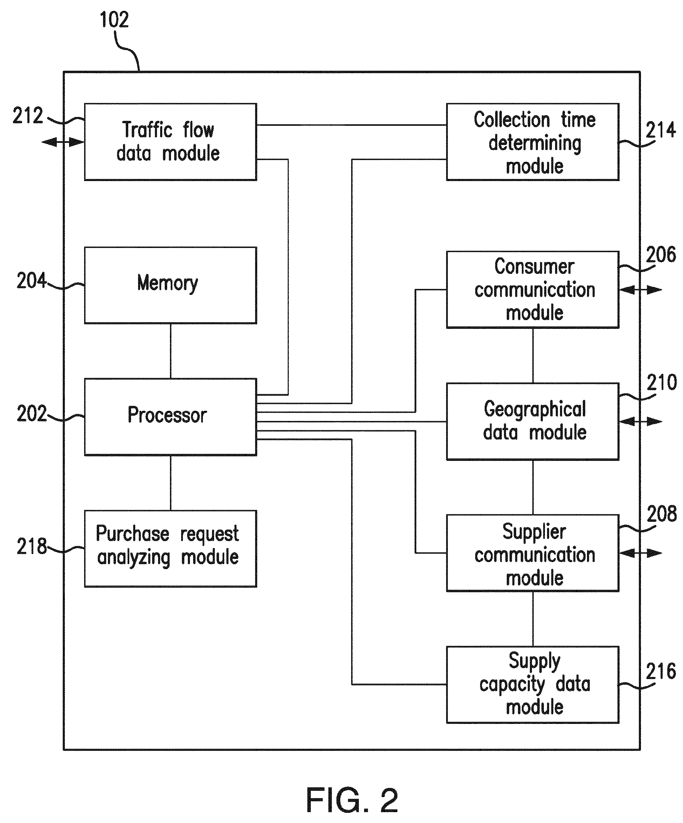

Figure 2 depicts components of the computer 102 shown in Figure 1. The computer 102 comprises a processor 202 which is in communication with a memory 204, a consumer communication module 206, a supplier communication module 208, a geographical data module 210, a traffic flow data module 212, a collection time determining module 214, a supply capacity data module 216 and a purchase request analysing module 218. The mobile device also comprises a graphical user interface (GUI) (not shown) in communication with the processor.

The processor 202 controls the operation of the computer by issuing commands to the various components of the computer to perform operations. The memory 204 is for securely storing data, such as traffic flow data and supply capacity data.

The consumer communication module 206 and the supplier communication module 208 are arranged to establish connections with consumers and suppliers respectively via any telecommunications network suitable for transmitting data, such that data can be securely transmitted between the computer 102 and any consumers and suppliers.

The geographical data module 210 is arranged to obtain or determine the geographical data required to carry out the present method. The geographical data module 210 is able to obtain geographical data relating to consumers and suppliers as it is in communication with the consumer communication module 206 and the supplier communication module 208. The geographical data module 210 is also in communication with a telecommunications network via which it is able to obtain any further geographical data and to define geographical areas based on the further geographical data.

The traffic flow data module 212 is in communication with a telecommunications network via which it is able to obtain localised traffic flow data required to determine collection times.

The collection time determining module 214 is in communication with the traffic flow data module 212 and is arranged to determine collection times based on traffic flow data obtained by the traffic flow data module 212.

The supply capacity data module 216 is in communication with the supplier communication module 208, via which it is able to obtain supply capacity data from any suppliers, and to use the supply capacity data to determine whether or not a particular supplier can fulfil a particular purchase request.

The purchase request analysing module 218 is in communication with the processor 202. The purchase request analysing module 218 determines a purchase item price for each purchase item in the purchase requests.

The first consumer 104a and second consumer 104b are each provided with a consumer device for sending a purchase request to the computer 102. Each consumer device comprises a consumer input receiving module configured to receive a consumer input regarding a purchase, a purchase request generating module configured to generate a purchase request based on the consumer input, and a computer communication module configured to send the purchase request to the computer and receive a collection time from the computer.

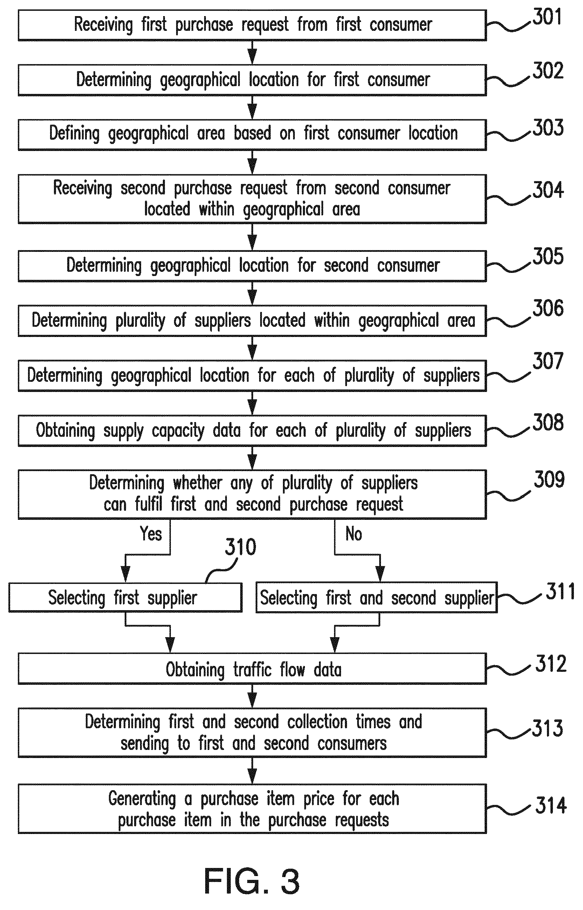

Figure 3 is a process flow diagram. At step 301, the consumer communication module 206 receives a first purchase request from the first consumer 104a. The first purchase request is a data packet containing a user ID, a number of purchase item requests (e.g. requests for apples, oranges etc.), an amount for each of the items and location data for the first consumer 104a, for example, as geographic coordinates. At step 302, the geographical data module 210 determines a geographical location for the first consumer 104a based on the received location data. For example, the geographical data module 210 may use received geographic coordinates or the IP address of the first consumer 104a to determine the geographical location for the first consumer 104a.

At step 303, the geographical data module 210 defines a first geographical area based on the first consumer location. The geographical data module 210 defines the extent of the geographical area based on one or more of the following rules sets of:
a number of suppliers located within the geographical area must exceed a predetermined lower threshold and a number of suppliers located within the geographical area must not exceed a predetermined upper threshold;
a number of consumers located within the geographical area must exceed a predetermined lower threshold and a number of consumers located within the geographical area must not exceed a predetermined upper threshold; and/or
a number of people living in the geographical area must exceed a predetermined lower threshold and a number of people living in the geographical area must not exceed a predetermined upper threshold.

At step 304, the consumer communication module 206 receives a second purchase request from the second consumer 104b, who is located within geographical area. The second purchase request is also a data packet containing a user ID, a request for a number of items, an amount for each of the items and location data for the second consumer 104a. At step 305, the geographical data module 210 determines a geographical location for the second consumer 104b in the same manner by which the location of the first consumer is determined in step 302.

At step 306, the geographical data module 210 determines a plurality of suppliers located within the geographical area by accessing a relational database in which supplier data is stored, the supplier data including supplier location data, such as geographic coordinates, by which the geographical data module 210 is able to determine whether a supplier located within the geographical area. At step 307, the geographical data module 210 determines a geographical location for each of the plurality of suppliers, again by accessing supplier location data stored in the relational database. The geographical data module 210 may also seek confirmation of supplier location directly from suppliers via the supplier communication module 208.

At step 308, the supply capacity data module 216 obtains supply capacity data for each of plurality of suppliers by contacting each of the suppliers directly via the supplier communication module 208 or by accessing a relational database, where this data is stored in the database. At step 309, the supply capacity data module 216 determines whether any of plurality of suppliers can fulfil the first and second purchase request based on the supply capacity data by comparing the supply capacity data with the first and second purchase requests. If one or more of the plurality of suppliers can fulfil the first and second purchase requests, step 310 is carried out. If none of the supplier can carry out the first and second purchase requests, step 311 is carried out.

At step 310, a first supplier 106 is selected to fulfil the first and second purchase requests. The first supplier 106 is selected based on the geographical location of the first consumer 104a and the second consumer 104b, the geographical locations of the suppliers determined as being able to fulfil the first and second purchase requests. If only one supplier is determined as being able to fulfil the first and second purchase requests, then that supplier is selected. If multiple suppliers are determined as being able to fulfil the first and second purchase requests, an optimal supplier is selected based on the distances between the first consumer 104a and the second consumer 104b and the suppliers determined as being able to fulfil the first and second purchase requests.

At step 311, the first supplier 106 and second supplier 108 are selected based on their combined supply capacity data, such that the combined supply capacity of the first 106 and second suppliers is sufficient to fulfil the first and second purchase requests, as well as based on the geographical location of the first consumer 104a and the second consumer 104b and the geographical locations of the suppliers. In this way, optimal suppliers can be identified.

In each of steps 310 and 311, suppliers are selected by identifying a supplier or suppliers located at a shortest distance from the first consumer 104a and second consumer 104b.

At step 312, the traffic flow data module 212 obtains traffic flow data based on the respective geographical locations of the first consumer 104a, the second consumer 104b and the first supplier 106 (and second supplier 108, if selected).

The traffic flow data module 212 is able to obtain real time traffic data on traffic flow, as well as historical traffic data, from the external server 114 which is able to communicate with a telecommunications network. The information obtained from the external server is used by the traffic flow data module 212 to identify trends which are used to accurately predict optimal low traffic periods for specific geographical locations and areas.

At step 313, the collection time determining module 214 determines respective first and second collection times for each of the selected first 106 and second 108 suppliers based on the traffic flow data obtained by the traffic flow data module 212. The consumer communication module 206 sends the collection times to the first and second consumers 104a and 104b. The collection time determining module 214 analyses the obtained traffic flow data to identify a period of expected low traffic flow and sets the collection times within this period.

A collection vehicle is then driven to the first supplier at the geographical location for the first supplier at the first collection time, thereby reducing congestion. The same collection vehicle, or a further collection vehicle, is then driven to the second supplier at the geographical location for the second supplier at the second collection time, thereby reducing congestion.

At step 314, the purchase request analysing module 218 is arranged to analyse the first purchase request and the second purchase request and identify each of the different purchase items contained within the first purchase request and the second purchase request. The purchase request analysing module 218 determines any common purchase items contained within both purchase requests. The purchase request analysing module 218 then aggregates the common purchase items to determine a total number for each purchase item and generates a purchase item price for each purchase item based on their total number. The purchase request analysing module 218 determines whether the total number of each purchase item exceeds an upper threshold and, if they do, reduces the purchase item price for that purchase item.

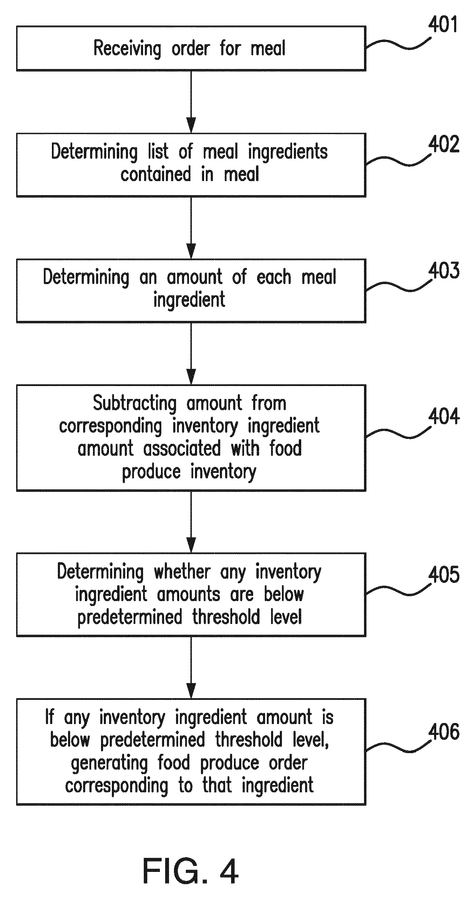

Figure 4 is a further process flow diagram. The method is carried out at the inventory management computer 112. At step 401, a customer at the first consumer 104a places an order for a meal and the inventory management computer 112 receives the order for a first meal. At step 402, the inventory management computer 112 analyses the first meal order and determines a list of meal ingredients contained in the meal. At step 403, the inventory management computer 112 determines an amount of each meal ingredient. At step 404, the inventory management computer 112 subtracts the amount of each meal ingredient from a corresponding inventory ingredient amount associated with the food produce inventory of the first consumer 104a. At step 405, the inventory management computer 112 determines whether any inventory ingredient amounts are below a predetermined threshold level. At step 406, the inventory management computer 112 generates a purchase request corresponding to any inventory ingredient determined to be below the predetermined threshold level.

The computer 112 comprises a meal order receiving module configured to carry out step 401, a meal ingredients determining module configured to carry out steps 402 and 403, an inventory management module configured to carry out steps 404 and 405, and a purchase request generating module configured to carry out step 406.

The process flow charts and descriptions thereof herein should not be understood to prescribe a fixed order of performing the method steps described therein. Rather, the method steps may be performed in any order that is practicable.

Generally, any of the functionality described in this text or illustrated in the figures can be implemented using software, firmware (e.g., fixed logic circuitry), programmable or nonprogrammable hardware, or a combination of these implementations.

Methods and processes described herein can be embodied as code (e.g., software code) and/or data. Such code and data can be stored on one or more computer-readable media, which may include any device or medium that can store code and/or data for use by a computer system.

## Claims

1. A method, at a computer, of controlling traffic flow in a transit network, the method comprising the steps of:
receiving a first purchase request from a first consumer;
determining a geographical location for the first consumer;
defining a geographical area based on the first consumer's location;
determining a first supplier located within the geographical area;
determining a geographical location for the first supplier; and
controlling traffic flow by:
obtaining first traffic flow data based on the respective geographical locations of the first consumer and the first supplier;
determining a first collection time based on the first traffic flow data; and
sending the first collection time to the first consumer.

2. The method of claim 1, wherein the first collection time is determined by analysing the first traffic flow data to identify a period of expected low traffic flow and setting the first collection time within the identified period.

3. The method of any preceding claim, further comprising the steps of:
receiving a second purchase request from a second consumer located within the geographical area;
determining a geographical location for the second consumer; and
controlling traffic flow by:
obtaining second traffic flow data based on the respective geographical locations of the second consumer and the first supplier;
determining a second collection time based on the second traffic flow data; and
sending the second collection time to the second consumer.

4. The method of claim 3, wherein the step of determining a first supplier further comprises determining a plurality of suppliers located within the geographical area, wherein the step of determining a geographical location for the first supplier further comprises determining a geographical location for each of the plurality of suppliers and further comprising the step of obtaining supply capacity data for each of the plurality of suppliers.

5. The method of claim 4, wherein the step of determining a first supplier further comprises selecting the first supplier from the plurality of suppliers based on the geographical location of the first consumer and/or the second consumer, the geographical locations of the plurality of suppliers in the list of suppliers and the supply capacity data;

6. The method of claim 5, wherein the first supplier is selected by identifying a supplier located at a shortest distance from the first and/or second consumer.

7. The method of claim 5 or claim 6, further comprising the steps of:
determining if any of the plurality of suppliers is able to fulfil the first and/or second purchase request based on the capacity data; and
if the capacity data indicates that one or more of the plurality of suppliers is able to fulfil the first and/or second purchase request, selecting one of the one or more suppliers as the first supplier.

8. The method of claim 7, further comprising the step of selecting a second supplier based on a geographical location of the first and/or second consumer and the geographical locations of the plurality of suppliers, if the capacity data indicates that no one supplier is able to fulfil the first and/or second purchase request.

9. The method of any of claims 5 to 8, further comprising the steps of:
identifying any purchase items contained within the first purchase request and the second purchase request;
determining any common purchase items contained within both purchase requests;
aggregating the common purchase items to determine a total number for each purchase item;
generating a purchase item price for each purchase item based on their total number; and
if the total number of a purchase item exceeds an upper threshold, reducing the purchase item price for that purchase item.

10. The method of any preceding claim, wherein an extent of the geographical area is defined based on one or more of the following rules:
a number of suppliers located within the geographical area must exceed a predetermined lower threshold; and
a number of suppliers located within the geographical area must not exceed a predetermined upper threshold.

11. The method of any preceding claim, wherein an extent of the geographical area is determined based on one or more of the following rules:
a number of consumers located within the geographical area must exceed a predetermined lower threshold;
a number of consumers located within the geographical area must not exceed a predetermined upper threshold;
a number of people living in the geographical area must exceed a predetermined lower threshold; and
a number of people living in the geographical area must not exceed a predetermined upper threshold.

12. A method, at a computer, of managing a food produce inventory, the method comprising the steps of:
receiving an order for a meal;
determining a list of meal ingredients contained in the meal;
determining an amount of each meal ingredient;
subtracting the amount of each meal ingredient from a corresponding inventory ingredient amount associated with the food produce inventory;
determining whether any inventory ingredient amounts are below a predetermined threshold level;
if any inventory ingredient amount is below the predetermined threshold level, generating a purchase request corresponding to that ingredient.

13. A computer comprising:
a memory;
a consumer communication module configured to receive a first purchase request from a consumer;
a geographical data module configured to determine a geographical location for the first consumer, define a geographical area based on the first consumer's location, determine a first supplier located within the geographical area and determine a geographical location for the first supplier;
a traffic flow data module configured to obtain first traffic flow data based on the respective geographical locations of the first consumer and the first supplier; and
a collection time determining module configured to determine a first collection time based on the first traffic flow data for sending to the first consumer.

14. A consumer device for sending a purchase request to a computer the consumer device comprising:
a consumer input receiving module configured to receive a consumer input regarding a purchase;
a purchase request generating module configured to generate a purchase request based on the consumer input; and
a computer communication module configured to send the purchase request to the computer and receive a collection time from the computer;
the computer comprising:
a memory;
a consumer communication module configured to receive the purchase request from the consumer device;
a geographical data module configured to determine a geographical location for the consumer device, define a geographical area based on the consumer device's location, determine a supplier located within the geographical area and determine a geographical location for the supplier;
a traffic flow data module configured to obtain traffic flow data based on the respective geographical locations of the consumer device and the supplier; and
a collection time determining module configured to determine a collection time based on the traffic flow data for sending to the consumer device.

15. A computer readable medium containing instructions which when executed cause a computer to perform a method of controlling traffic flow in a transit network, the method comprising the steps of:
receiving a first purchase request from a first consumer;
determining a geographical location for the first consumer;
defining a geographical area based on the first consumer's location;
determining a first supplier located within the geographical area;
determining a geographical location for the first supplier; and
controlling traffic flow by:
obtaining first traffic flow data based on the respective geographical locations of the first consumer and the first supplier;
determining a first collection time based on the first traffic flow data; and
sending the first collection time to the first consumer.
